**Europäisches Patentamt**

**European Patent Office**

**Office européen des brevets**

(19)

(11) Numéro de publication: **0 266 235 B1**

# (12) FASCICULE DE BREVET EUROPEEN

(45) Date de publication du fascicule du brevet:
08.11.89

(21) Numéro de dépôt: **87402129.8**

(22) Date de dépôt: **24.09.87**

(51) Int. Cl.⁴: **F02C 7/18**, F01D 5/08,
F16K 31/00, G05D 23/08,
F01P 7/02

(54) Turbomachine munie d'un dispositif de commande automatique des débits de ventilation de turbine.

(30) Priorité: **01.10.86 FR 8613671**

(43) Date de publication de la demande:
**04.05.88 Bulletin 88/18**

(45) Mention de la délivrance du brevet:
**08.11.89 Bulletin 89/45**

(84) Etats contractants désignés:
**DE FR GB**

(56) Documents cités:
**FR-A- 2 375 650**
**GB-A- 712 346**
**GB-A- 923 789**
**US-A- 1 557 197**
**US-A- 3 078 671**
**US-A- 4 217 755**

**PATENT ABSTRACTS OF JAPAN,**
**vol. 7, no. 169 (M-231)[1314], 26 juil-**
**let 1983, page 107 M 231; & JP-A-58 74 801 (HITACHI**
**SEISAKUSHO K.K.) 06-05-1983**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Jourdain, Gérard Ernest André, 4, résidence l'Arcadie Saintry Sur Seine, F-91100 Corbeil Essonnes(FR)**
Inventeur: **Payen, Jean Michel, 116 Square A. Rodin, F-77350 Le Mee Sur Seine(FR)**
Inventeur: **Mazeaud, Georges, Les rives de l'Yerres Bâtiment B3, F-91330 Yerres(FR)**

(74) Mandataire: **Moinat, François et al, S.N.E.C.M.A. Service des Brevets Boîte Postale 81, F-91003 Evry Cédex(FR)**

ACTORUM AG

## Description

La présente invention concerne une turbomachine munie d'un dispositif de commande automatique des débits d'air de ventilation de turbine.

La recherche de performances améliorées dans les turbomachines modernes conduit à une élévation des températures de fonctionnement qui impose la mise au point de nouveaux matériaux répondant à ces conditions d'utilisation. La maitrise des dilatations thermiques et la recherche d'une tenue améliorée en service et d'un accroissement de durée de vie des pièces amènent également à prévoir des systèmes complexes de refroidissement qui utilisent en particulier des prélèvements d'air dans des parties froides de la machine pour la ventilation de parties plus chaudes comme par exemple la turbine. Le développement technique s'est en fait accompagné d'une sensible élévation des températures à l'entrée de la tubine.

Un des facteurs influant également sur le niveau des performances, en particulier le rendement ou la poussée maximale dans les applications aéronautiques, est la maitrise d'un jeu minimal mais suffisant entre parties fixes et parties tournantes de turbomachine. Pour obtenir une adaptation des dilatations/contractions radiales d'un élément de stator situé au droit d'une extrémité radiale d'une partie tournante (aube ou élément de rotor) aux déplacements radiaux de cette extrémité, un des moyens couramment utilisés consiste à assurer une ventilation de cet élément de stator.

On comprend ainsi que le réglage des débits d'air de ventilation est un facteur important pour la maitrise des conditions de fonctionnement d'une turbomachine, quelle que soit l'utilisation de cet air dont deux exemples viennent d'être indiqués, pour le refroidissement des éléments d'une turbine ou pour l'ajustement des jeux en fonctionnement entre rotor et stator.

FR-A-2 280 791 décrit, par exemple, un dispositif qui dose le mélange de deux flux gazeux à températures différentes, dirigé contre une paroi de stator de turbine au moyen d'un obturateur se déplaçant radialement par dilatation thermique au regard de deux passages de gaz. La mise en oeuvre d'un tel dispositif reste toutefois délicate et complexe et elle impose l'utilisation de deux sources de gaz à des températures différentes.

US-3 029 064 décrit une commande d'alimentation en air de chambres de refroidissement disposées autour d'un carter de turbine comportant des vannes à papillon dont le déplacement est commandé par les dilatations différentielles d'une couronne divisée en segments cylindriques, chacun associé à une vanne et ayant une extrémité fixée au carter, l'autre extrémité étant reliée à la vanne. Ce dispositif utilise une pluralité de vannes dont les défauts de fiabilité peuvent remettre en cause son efficacité.

L'invention vise à obtenir une commande automatique des débits d'air de ventilation d'une turbine sans encourir les inconvénients des dispositifs connus. Un avantage important de cette commande automatique est de permettre une adaptation permanente en fonctionnement du débit de ventilation de la turbine aux besoins en utilisation, aux besoins de la mission par exemple dans une application aéronautique à un turboréacteur monté sur avion. Il en résulte une diminution appréciable de la consommation spécifique dans certaines phases de vol qui est un paramètre essentiel pour ces matériels. La modulation peut ainsi être appliquée aux phases de fonctionnement à régime partiel qui représentent un pourcentage important de la durée de fonctionnement, pouvant dépasser 80 %. La turbomachine selon l'invention est caractérisée en ce que sur le circuit d'air de ventilation de la turbine sont placés deux anneaux radialement superposés, disposés concentriquement dans un support, chaque anneau est fixé en un seul point audit support, les deux points obtenus étant diamétralement opposés et chaque anneau comporte des lumières réparties périphériquement et en ce que les matériaux constituant, d'une part, le support et, d'autre part, les anneaux superposés possèdent des coefficients de dilatation thermique nettement différenciés, de telle sorte que en fonction des dilatations thermiques dudit support suivant les conditions de fonctionnement de la turbomachine, soit les lumières des anneaux viennent en coïncidence pour laisser passer l'air de ventilation, soit elles sont complètement décalées les unes par rapport aux autres, fermant tout passage d'air, soit elles prennent une position intermé-diaire pout obtenir un débit d'air de ventilation modulé.

En fonction de la forme des lumières, diverses lois de variation des sections de passage et donc des débits d'air en fonction de la température peuvent être avantageusement obtenues.

Avantageusement, le matériau du support est métallique et celui des anneaux superposés est céramique.

Avantageusement, les anneaux superposés peuvent être placés sur le circuit de refroidissement par air d'un étage rotorique de turbine ou sur le circuit de ventilation d'un anneau de stator en vue de l'ajustement des jeux entre rotor et stator ou ils peuvent être placés à l'amont du circuit de ventilation d'une turbine, dans le carter de compresseur, au niveau du prélèvement d'air.

L'invention sera mieux comprise ainsi que d'autres caractéristiques et avantages à l'aide de la description qui va suivre d'un mode de réalisation de l'invention ainsi que de deux de ses applications avantageuses, en référence aux dessins annexés, sur lesquels:

- la figure 1 représente une demi-vue partielle, en coupe longitudinale passant par l'axe de la turbomachine, d'une turbine munie d'un dispositif de commande des débits d'air de ventilation conforme à l'invention, appliqué à un circuit d'alimentation en air de refroidissement d'un étage rotorique ;

- la figure 2 représente une vue partielle en perspective à une échelle agrandie du détail II de la figure 1 montrant dans le dispositif conforme à l'invention le montage de deux anneaux superposés sur un support ;

- la figure 3 montre une vue partielle transversale du support représenté à la figure 2 ;
- les figures 4a et 4b représentent des vues schématiques, en coupe transversale à l'axe de la turbine, du montage des deux anneaux superposés sur le support, à température froide et à température chaude après dilatation thermique du support ;
- les figures 5a et 5b représentent des vues de dessus développées partielles des anneaux superposés entrant dans le dispositif de la figure 1, à température froide et à température chaude ;
- les figures 6a, 6b, 6c schématisent différentes formes de lumières ménagées sur les anneaux superposés du dispositif de la figure 1,
- la figure 7 représente schématiquement les lois de variation de la section de passage dans les lumières représentées aux figures 6a, 6b, 6c en fonction de la température ;
- la figure 8 représente une demi-vue partielle, en coupe longitudinale passant par l'axe de la turbomachine, d'une turbine munie d'un dispositif de commande des débits d'air de ventilation conforme à l'invention et analogue à celui qui est représenté à la figure 1, appliqué au pilotage des déplacements radiaux d'un anneau de stator en vue de l'ajustement des jeux entre rotor et stator,
- la figure 9 représente une demi-vue partielle en coupe longitudinale d'un compresseur de turbomachine, au niveau du prélèvement de l'air destiné à la ventilation/refroidissement de la turbine et comportant un dispositif de commande des débits conforme à l'invention,
- la figure 10 montre une demi - vue partielle en coupe transversale du dispositif de la figure 9.

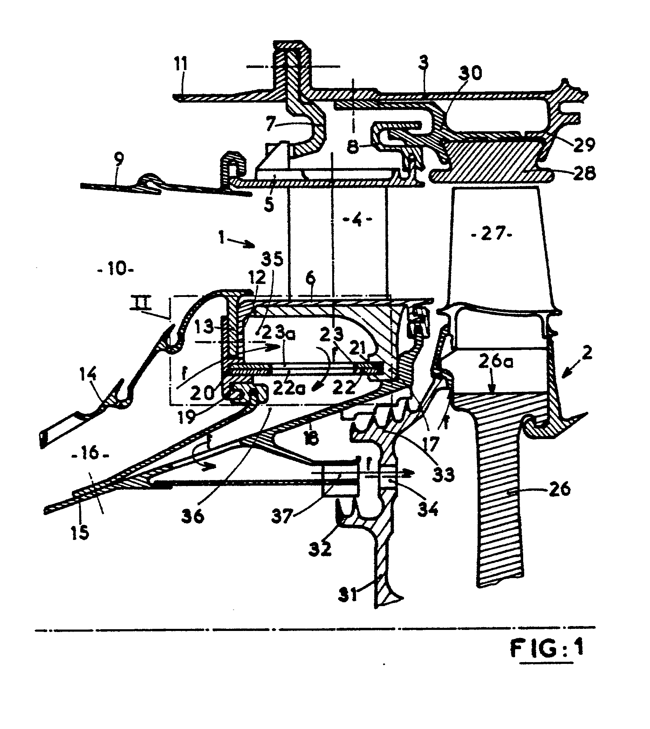

Sur la figure 1, une turbiner partiellement représentée conforme à l'invention comporte un distributeur statorique 1 et un étage rotorique 2 tournant montés à l'intérieur d'un carter externe 3 de turbine.

Le distributeur 1 comporte des aubes 4 de stator montées entre une enveloppe radialement externe 5 et une enveloppe radialement interne 6. L'enveloppe externe 5 est fixée au carter 3 par l'intermédiaire de brides radiales amont 7 et aval 8 et qui sont reliées par brides à la chemise externe 9 de la chambre de combustion 10 située en amont, amont et aval sont définis par rapport au sens normal de circulation du flux principal des gaz de la turbomachine. Le carter 3 de turbine est également relié par brides en amont au carter externe 11 de chambre de combustion. Côté interne le distributeur 1 comporte un talon périphérique 12 des aubes fixé côté amont sur une bride 13 de la chemise interne 14 de chambre de combustion qui définit avec une enveloppe interne 15 une enceinte interne 16 de chambre de combustion . Côté aval, les aubes 4 de distributeur comportent de même un talon périphérique 17. L'enveloppe interne 15 de chambre se prolonge vers l'aval par une virole annulaire 18 qui se raccorde au bord aval de l'enveloppe interne 6 de distributeur et au talon périphérique aval 17. Une bride radiale 19 est fixée à la bride 13 aval interne de chambre de combustion et est ainsi solidaire du talon périphérique 12.

Cette bride 19 comporte sur sa face aval une gorge périphérique 20 et en regard du côté aval, le talon périphérique 17 comporte également sur sa face amont une gorge périphérique 21. Dans ces gorges 20 et 21 sont montés deux anneaux 22 et 23 en superposition radiale et disposés concentriquement. Dans ces anneaux 22 et 23 sont ménagées des lumières 22a et 23a régulièrement réparties périphériquement. Les matériaux constituant, d'une part, les anneaux 22 et 23 et, d'autre part, leurs structures support, en particulier la bride support 19 et le talon périphérique support 17 sont différents et possèdent des coefficients de dilatation thermique nettement différents.

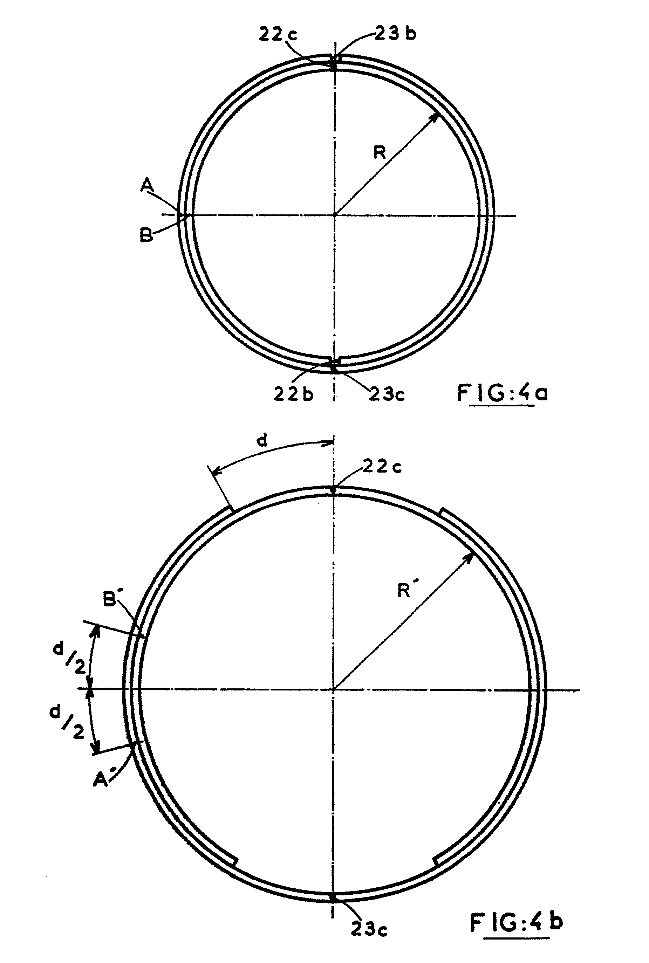

Selon une forme préférée de réalisation, les structures support sont métalliques et les anneaux 22 et 23 sont constitués d'un matériau céramique, ce qui conduit par exemple à un écart entre les coefficients de dilatation thermique de 12 x 10-6 mm par degré C. Chaque anneau 22 ou 23 est ouvert et présente une fente transversale 22b et 23b, comme cela est visible sur les figures 4a, 4b, 5a, et 5b et chaque anneau est solidarisé au support en un seul point qui est ainsi un point fixe 22c et 23c sur les figures 4a et 4b, les déplacements relatifs circonférentiels entre les anneaux 22 et 23 d'une part, et leurs supports, d'autre part, conservant toute liberté en dehors des points fixes respectifs. La figure 4a montre schématiquement deux anneaux 22 et 23 montés en superposition radiale et concentriquement sur un support 19. Les points fixes respectifs de chaque anneau 22c et 23c sont diamétralement opposés et les fentes 22b et 23b respectivement diamétralement opposées aux points fixes le sont également entre elles. Les anneaux sont représentés sur la figure 4a à température froide, en l'absence de toute dilatation thermique notable. La figure 4b schématise, en exagérant les valeurs des déplacements obtenus pour faciliter la compréhension, la position des anneaux à température chaude. Cette figure 4b montre la dilatation thermique du support 19 qui est passé d'un rayon R à un rayon R'. Au niveau des fentes 22b et 23b, chaque extrémité d'anneau s'est ainsi déplacée d'une distance d =π (R' - R). Un point A sur l'anneau 22 ou un point B sur l'anneau 23 situés à mi-distance entre le point fixe et la fente sur la figure 4a, à température froide se sont respectivement déplacés sur la figure 4b en sens inverse l'un de l'autre en A' et B', chacun d'une distance

$$d/2 = \frac{\pi}{2} (R' - R)$$

Les variations obtenues en fonction des écarts de température $\Delta T$ et du coefficient de dilatation thermique $\Delta\alpha$ sont:

$$R' - R = R \times \Delta\alpha \times \Delta T$$

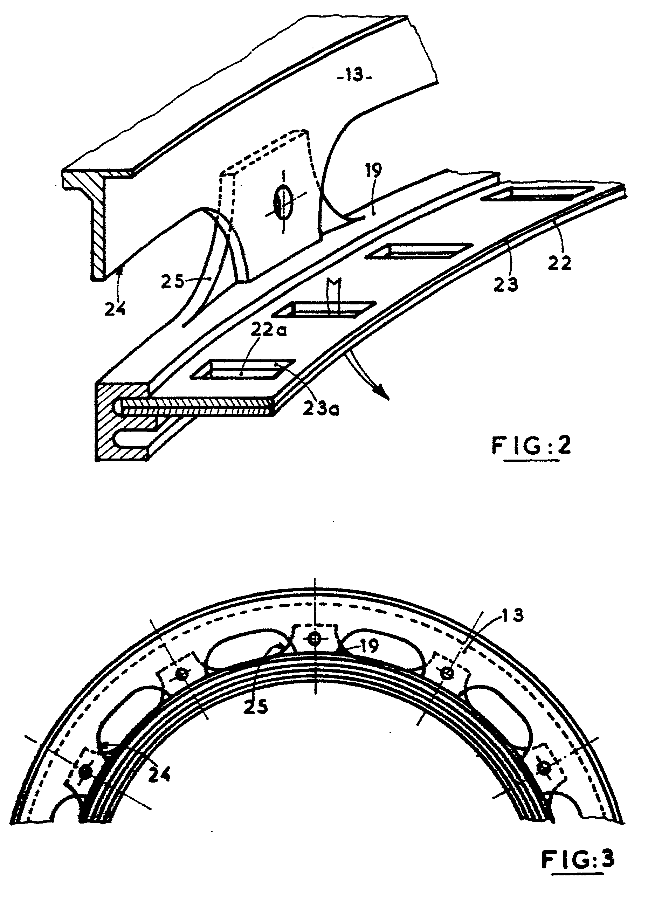

Comme cela est visible sur les figures 2 et 3, la bride 13 comporte des découpes 24 régulièrement réparties périphériquement et de même la bride radiale 19 comporte des découpes coopérantes 25 également régulièrement réparties périphériquement.

Par ailleurs, en aval, l'étage rotorique 2 de la turbine est constitué d'un disque 26 sur lequel sont
montées des aubes mobiles 27 dans des alvéoles
26a. Au droit des extrémités des aubes 27, le stator
comporte de manière classique un anneau d'étanchéité 28 fixé au carter de turbine 3 par une bride
radiale 29 et un anneau support 30. Au disque 26 de
rotor est également associé en amont un disque 31
qui porte des labyrinthes 32 et 33 d'étanchéité et
sur lequel sont prévus des perçages 34 régulièrement répartis en couronne.

La turbine qui vient d'être décrite comporte un
circuit de ventilation assurant le refroidissement
par air de l'étage rotorique 2 et en particulier des alvéoles 26a du disque 26 et des pieds d'aubes 27 qui
y sont montés. Les débits d'air de ce circuit de ventilation sont commandés par le dispositif conforme à
l'invention qui fonctionne de la manière suivante.
L'air de refroidissement est prélevé dans l'enceinte
16 de chambre de combustion et pénètre par les découpes 24 et 25 des brides 13 et 19 dans une enceinte annulaire 35 ménagée entre les anneaux superposés 22 et 23 et l'enveloppe interne 6 de distributeur,
puis à travers les lumières 22a et 23a des anneaux
22 et 23 dans une enceinte 36 ménagée entre lesdits
anneaux 22 et 23 et la virole annulaire 18. De là, l'air
est dirigé à travers les accélérateurs 37 portés par
ladite virole 18 et à travers les perçages 34 du disque porte-labyrinthe 31 vers les alvéoles 26a du
disque 26 de rotor de turbine. Le circuit de l'air de
refroidissement est représenté par des flèches f
sur la figure 1. Les lumières 22a et 23a des anneaux
superposés 22 et 23 sont disposées de manière telle que à température froide, aucun passage d'air
n'est autorisé à travers les lumières 22a et 23a qui
sont décalées les unes par rapport aux autres.

Par contre, lorsque la température s'est élevée,
les dilatations thermiques des supports constitués
par la bride 19 et le talon périphérique 17 et les structures associées amènent les lumières 22a et 23a à
communiquer les unes avec les autres, ce qui permet un passage d'air et par suite d'assurer un refroidissement au niveau des alvéoles 26a du disque
26 de rotor. Pour une température élevée de fonctionnement donnée, correspondant par exemple à
des conditions de fonctionnement transitoires d'accélération pour lesquelles le refroidissement maximal doit être appliqué, la superposition des lumières
22a d'une part et 23a d'autre part peut être complète, ce qui permet d'obtenir le débit d'air maximal.

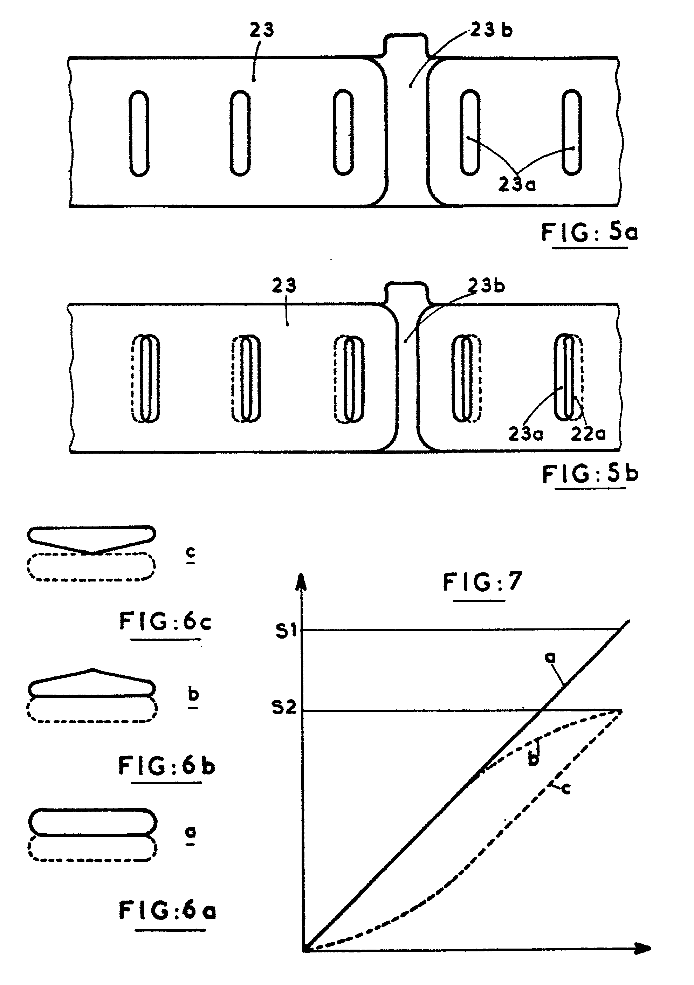

En fonction des variations de température, le réglage des débits d'air qui résulte directement de la
variation des sections de passage à travers les lumières 22a et 23a peut être adapté selon les caractéristiques de fonctionnement de la machine. C'est
ainsi que les lumières, comme représentées sur les
figures 6a, 6b, 6c peuvent recevoir différentes
formes, par exemple rectangulaires, trapézoïdales
ou triangulaires. Il en résulte selon la forme choisie,
comme représenté sur le graphique de la figure 7,
une loi de variation des sections de passage en
fonction de la température qui est linéaire (courbe a
correspondant à des lumières rectangulaires selon la figure 6a) ou non-linéaire (courbes b et c correspondant respectivement aux lumières des figures
6b et 6c).

Un dispositif de commande automatique des débits d'air selon l'invention tel qu'il vient d'être décrit
dans son application à un circuit d'alimentation en
air de refroidissement d'un élément de turbine peut
être appliqué, chaque fois qu'un réglage des débits
d'air est nécessaire, dans une zone de turbomachine où des dilatations thermiques sont obtenues par
suite des variations de température résultant des
conditions de fonctionnement de la turbomachine.
Une modulation de la        ventilation est ainsi appliquée en fonction de l'évolution thermique de l'air de
prélèvement.

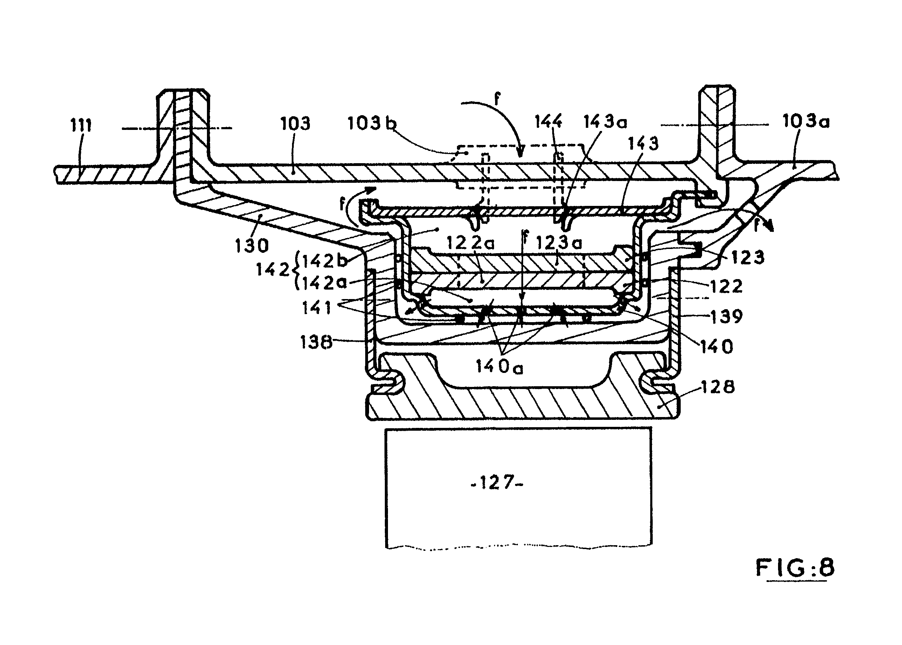

On décrira ainsi, à titre d'exemple de réalisation,
en référence à la figure 8, une seconde application
du dispositif de commande des débits d'air conforme
à l'invention. Sur la figure 8, une turbine partiellement représentée comporte un carter externe en
plusieurs éléments 111, 103 et 103a assemblés longitudinalement par des brides. Sur ce carter est fixé un
support annulaire 130 qui porte par l'intermédiaire
de brides radiales annulaires amont 138 et aval 139
un anneau d'étanchéité 128 disposé au droit des extrémités des aubes 127 de rotor. Une virole annulaire 140 en tôle mince comportant des multiperforations 140a régulièrement réparties est montée du côté radialement externe du support annulaire 130 sur
lequel il s'appuie par exemple par un système de
billes 141. Le support annulaire 130 et la virole 140
présentent une section en U qui délimite ainsi une
enceinte annulaire 142 séparée en deux parties par
des anneaux 122 et 123 superposés radialement et
disposés concentriquement qui sont analogues aux
anneaux 22 et 23 précédemment décrits dans la précédente application en référence aux figures 1 à 7.
Les anneaux superposés 122 et 123 en matériau céramique comportent également des lumières 122a et
123a. L'enceinte 142 est fermée par une virole radialement externe 143 qui présente des passages 143a
périphériquement répartis correspondant à des
passages 103b également ménagés dans le carter
externe 103. Ces passages 143a et 103b sont reliés
par des bobines 144 et raccordés à un circuit de
prélèvement d'air au compresseur de la turbomachine, non représenté au dessin.

Le fonctionnement du dispositif de commande des
débits d'air est analogue à celui qui a été précédemment décrit, en référence aux figures 1 à 7. En régime de croisière ou à froid, les lumières 122a et 123a
des anneaux superposés 122 et 123 sont disposées
de manière à être totalement décalées et l'arrivée
d'air est par conséquent arrêtée. Aucune ventilation de l'anneau de stator de turbine n'est utilisée et
le prélèvement d'air au compresseur est arrêté.
Dans des conditions transitoires d'accélération de
la machine par contre, au régime de plein gaz, de
l'air chaud prélevé au compresseur est acheminé
par les passages 103b, 143a et alimente l'enceinte
142. Il en résulte des dilatations thermiques du support métallique 130 et 140 des anneaux superposés
122 et 123 et, comme précédemment décrit, un déplacement circonférentiel en sens inverse des deux
anneaux 122 et 123 amène progressivement les lumières 122a et 123a en coïncidence. L'impact des jets d'air par les multiperforations 140a amène ainsi la dilatation thermique du support annulaire 130 et un déplacement radial conséquent de l'anneau d'étanchéité 128 qui permet d'assurer, dans ces conditions de fonctionnement, un jeu suffisant entre rotor et stator de turbine. Les flèches f représentent sur la figure 8 le circuit de l'air de ventilation.

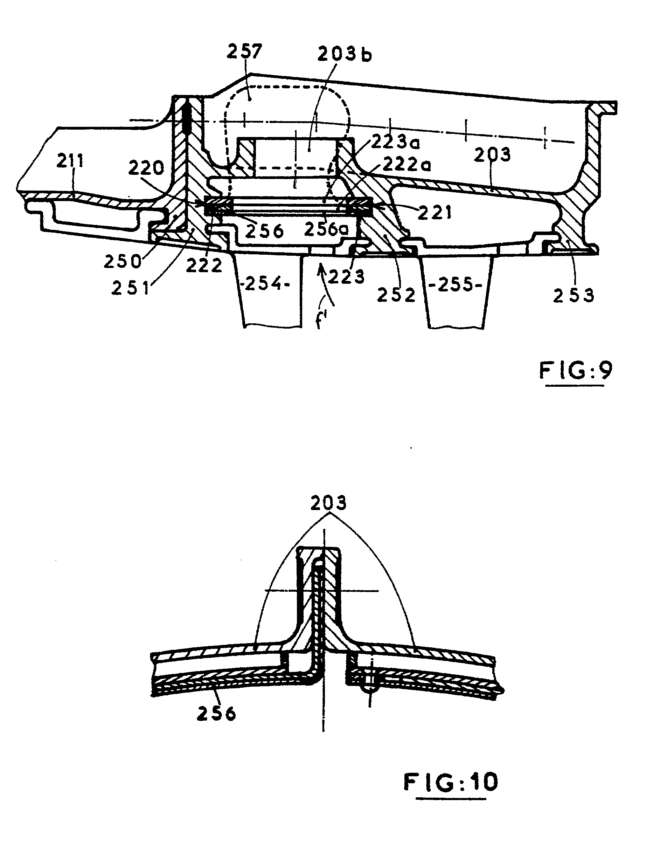

Un autre exemple de réalisation est représenté et sera décrit en référence aux figures 9 et 10. Dans cet exemple, une adaptation du débit d'air de ventilation et refroidissement d'une turbine basse-pression de turbomachine (étage distributeur et étage mobile) aux besoins utilisateurs, dans le cas d'une application sur turboréacteur, aux besoins de la mission, en permettant une diminution de la consommation spécifique dans certaines phases de vol, est obtenue en plaçant un dispositif, conforme à l'invention, de commande des débits d'air sur le circuit d'alimentation en air. Selon l'exemple représenté aux figures 9 et 10, le dispositif selon l'invention est placé à l'intérieur du carter du compresseur haute pression de la turbomachine, au niveau de l'étage de compresseur où s'effectue le prélèvement d'air. Sur la figure 9, un carter de compresseur comporte plusieurs éléments 211, 203 assemblés longitudinalement par des brides externes. Ces éléments de carter 211, 203 comportent également des brides radiales internes 250, 251, 252, 253 qui supportent des étages d'aubes fixes de stator telles que 254, 255. Les brides 251 et 252 du carter de compresseur 203 comportent également des gorges périphériques en regard, respectivement 220 et 221. Dans ces gorges 220 et 221 sont montés deux anneaux 222 et 223 en superposition radiale et disposés concentriquement, ces anneaux 222 et 223 étant constitués d'un matériau composite du type céramique. Du côté radialement interne et de la même façon dans les gorges circulaires 220 et 221 est monté un troisième anneau 256 qui lui, est métallique. Dans ces anneaux 222, 223 et 256 sont ménagées des lumières 222a, 223a, 256a régulièrement répartis périphériquement. Chaque anneau céramique 222 et 223 est lié à l'anneau métallique 256 en un seul point. Les anneaux 222, 223 et 256 sont ouverts et les deux points de fixation respectifs sont situés à chaque extrémité de l'anneau métallique 256. Au droit des lumières 222a, 223a et 256a, le carter de compresseur 203 comporte des passages 203b débouchant à l'extérieur dans un collecteur 257 à partir duquel l'air est acheminé vers la turbine. Lorsque le carter de compresseur est en deux parties hémicylindriques, les anneaux 222, 223 et 256 du dispositif de commande des débits d'air comprennent également respectivement deux secteurs dont le montage est représenté sur la figure 10.

Le fonctionnement du dispositif de commande des débits d'air est analogue à celui qui a été prédédemment décrit, en référence aux figures 1 à 7 ou en référence à la figure 8. L'anneau métallique 256 est directement exposé à la source de chaleur correspondant au prélèvement d'air dans la veine du compresseur selon la flèche f'.

Le déplacement linéaire est dans ce cas piloté par l'anneau métallique 256. En conséquence l'obturation ou le découvrement des fentes de passage d'air obtenues par la superposition des lumières 222a, 223a et 256a est piloté par la dilatation relative des anneaux en matériaux ayant des coefficients de dilatation thermique très différents, matériau céramique, d'une part, pour les anneaux 222 et 223 et matériau métallique, d'autre part, pour l'anneau 256. Ces variations de dilatations sont provoquées par l'évolution thermique du prélèvement d'air, en fonction des conditions de fonctionnement de la turbomachine qui correspondent également aux besoins de ventilation de la turbine.

Le dispositif selon l'invention dont le fonctionnement vient d'être décrit dans trois applications à la commande de débits d'air de ventilation d'une turbine présente de nombreux avantages qui en ressortent:

- le dispositif permet une variation importante du débit ;
- une répartition homogène sur toute la périphérie est obtenue dans tous les cas ;
- Le réglage des débits est obtenu sans nécessiter d'encombrement radial supplémentaire important, ce qui est particulièrement avantageux pour des applications aéronautiques visées par l'invention ;
- le dispositif présente une grande sécurité de fonctionnement et une excellente fiabilité ;
- de larges domaines d'application sont couverts concernant les commandes de débit d'air chaque fois que le fonctionnement fait intervenir des variations de température et les adaptations du dispositif selon l'invention sont facilitées du fait que diverses lois de variation des sections de passage en fonction de la température peuvent être obtenues en déterminant les formes des lumières coopérantes 122a et 123a des deux anneaux superposés 122 et 123.

## Revendications

1. - Turbomachine comportant un circuit d'alimentation en air de ventilation et munie d'un dispositif de commande automatique des débits d'air de ventilation de la turbine caractérisée en ce que sur le circuit d'air sont placés deux anneaux (22,23 ; 122,123 ; 222,223 ) radialement superposés, disposés concentriquement dans un support (17,19 ; 130,140 ; 251,252,256), chaque anneau (22,23 ; 122,123 ; 222,223) est ouvert et comporte une fente transversale (22b,23b) et est fixé audit support (17,19 ; 140) en un seul point (22c,23c)respectivement diamétralement opposé à la fente (22b,23b), les deux points obtenus étant diamétralement opposés et chaque anneau (22,23 ; 122,123 ; 222,223) comporte des lumières (22a,23a ; 122a, 123a ; 222a,223a) régulièrement réparties périphériquement et en ce que le matériau constituant les anneaux (22,23 ; 122,123 ; 222,223) superposés possède un coefficient de dilatation thermique nettement inférieur au coefficient de dilatation thermique du matériau constituant le support (17,19 ; 130,140 ; 256), de telle sorte que en fonction des dilatations thermiques dudit support (17,19 ; 130,140 ; 256) suivant les conditions de fonctionnement de la turbomachine, soit les lumières (22a,23a ; 122a,123a ; 222a,223a ) des anneaux (22,23 ; 122,123; 222,223) viennent en coïncidence pour laisser passer l'air de ventilation, soit elles sont complètement décalées les unes par rapport aux autres en fermant tout passage d'air, soit elles prennent une position intermédiaire pour obtenir un débit d'air de ventilation modulée.

2. - Turbomachine selon la revendication 1 caractérisée en ce que le support (17,19 ; 130,140 ; 256) est constitué d'un matériau métallique et les anneaux (22,23 ; 122,123 ; 222,223) superposés sont constitués d'un matériau dont le coefficient de dilatation thermique est nettement inférieur à celui du matériau du support, le matériau des anneaux étant du genre céramique.

3. - Turbomachine selon l'une des revendications 1 ou 2 caractérisée en ce que les lumières (22a,23a ; 122a,123a ; 222a;223a) des anneaux superposés ont une forme rectangulaire de telle sorte que la section de passage varie linéairement en fonction de la température.

4. - Turbomachine selon l'une des revendications 1 ou 2 caractérisée en ce que les lumières (22a,23a ; 122a,123a ; 222a,223a ) des anneaux (22,23 ; 122,123 ; 222,223) superposés ont une forme telle que la variation de section de passage est une fonction non-linéaire de la température.

5. - Turbomachine selon la revendication 4 caractérisée en ce que les lumières (22a,23a ; 122a,123a ; 222a,223a) des anneaux (22,23 ; 122,123 ; 222,223) superposés ont une forme trapézoïdale.

6. - Turbomachine selon la revendication 4 caractérisée en ce que les lumières (22a,23a ; 122a,123a ; 222a,223a ) des anneaux (22,23 ; 122,123 ; 222,223) superposés ont une forme triangulaire.

7. - Turbomachine selon l'une quelconque des revendications 1 à 6 caractérisée en ce que le support est constitué par une paroi radiale du talon périphérique interne (17) des aubes (4) de distributeur et par une bride radiale interne (19) fixée aux talons internes (12) desdites aubes (4) de telle sorte que l'air prélevé dans l'enceinte (16) de la chambre de combustion (10) après passage à travers les lumières (22a,23a) des anneaux superposés (22,23) montés dans des gorges annulaires (20,21) dudit support (19,17) est ensuite dirigé vers un étage rotorique (26,27) de turbine en vue de son refroidissement .

8. - Turbomachine selon l'une quelconque des revendications 1 à 6 caractérisée en ce que les deux anneaux (122,123) superposés sont placés à l'intérieur d'une enceinte annulaire (142) ménagée à l'intérieur du support annulaire à section en U (130,140) d'un anneau d'étanchéité (128) de stator de turbine qui constitue également le support desdits anneaux (122,123) de telle sorte que l'ajustement des jeux en fonctionnement entre rotor et stator est obtenu par le pilotage des déplacements radiaux de l'anneau d'étanchéité (128) suivant les dilatations thermiques du support (130,140) provoquées par les impacts de jets d'air dont le débit est réglé, annulé ou autorisé par le passage à travers les lumières (122a,123a) desdits anneaux (122,123) superposés, ladite enceinte annulaire (142) étant reliée à un prélèvement d'air au compresseur de la turbomachine.

9. - Turbomachine selon l'une quelconque des revendications 1 à 6 caractérisée en ce que les deux anneaux (222, 223) superposés sont montés dans deux gorges annulaires (220,221) en regard de deux brides radiales internes (251, 252) d'un carter (203) de compresseur et en ce qu'un anneau métallique (256) supplémentaire est disposé en superposition du côté radialement interne comportant des lumière (256a) de passage d'air, le prélèvement d'air étant acheminé par la ventilation et le refroidissement de la turbine par l'intermédiaire de passages (203b) du carter (203) débouchant dans un collecteur (257) et chaque anneau céramique (222,223) étant liés audit anneau métallique (256) en un seul point, respectivement à chaque extrémité dudit anneau (256).

10. - Turbomachine selon la revendication 9 caractérisé en ce que les deux anneaux superposés (222, 223) et l'anneau métallique support (256) comportent respectivement deux secteurs, les points de fixation étant répartis respectivement aux extrémités opposées des secteurs.

**Claims**

1. Gas turbine engine comprising a cooling air supply circuit and fitted with a device to control automatically the flow of turbine cooling air characterized in that in the air circuit are placed two rings (22, 23; 122, 123; 222, 223) placed radially one upon the other and arranged concentrically in a support (17, 19; 130, 140; 251, 252, 256), each ring (22, 23; 122, 123; 222, 223) is open and comprises a transverse slot (22b, 23b) and is fixed to the said support (17, 19; 140) at a single point (22c, 23c) respectively diametrically opposite the slot (22b, 23b), the two points obtained being diametrically opposed and each ring (22, 23; 122, 123; 222, 223) comprising openings (22a, 23a; 122a, 123a; 222a, 223a) regularly spaced circumferentially and in that the material of which the superimposed rings (22, 23; 122, 123; 222, 223) is made has a coefficient of expansion markedly lower than that of the material of which the support (17, 19; 130, 140; 256) is made, so that as a function of the thermal expansion of the said support (17, 19; 130, 140; 256) in accordance with the functioning of the turbine engine, either the openings (22a, 23a; 122a, 123a; 222a, 223a) in the rings (22, 23; 122, 123; 222, 223) coincide, to allow air to pass through, or they are completely offset in relation to each other, closing off the airways, or they take up an intermediate position, so providing a modulated flow of air.

2. Gas turbine engine in accordance with Claim 1 characterized in that the support (17, 19; 130, 140; 256) consists of a metallic material and the superimposed rings (22, 23; 122, 123; 222, 223) are made of a material with a coefficient of expansion markedly lower than that of the material of the support, the material of the rings being of the ceramic type.

3. Gas turbine engine in accordance with either of the Claims 1 or 2 characterized in that the openings (22a, 23a; 122a, 123a; 222a, 223a) in the superimposed rings are of rectangular shape such that the cross section of the airways varies linearly with temperature.

4. Gas turbine engine in accordance with either of the Claims 1 or 2 characterized in that the openings (22a, 23a; 122a, 123a; 222a, 223a) in the superimposed rings are of such shape that the variation in cross section of the airways in a non-linear function of temperature.

5. Gas tubine engine in accordance with Claim 4 characterized in that the openings (22a, 23a; 122a, 123; 222a, 223a) in the superimposed rings (22, 23; 122, 123; 222, 223) are of trapezoidal shape.

6. Gas turbine engine in accordance with Claim 4 characterized in that the openings (22a, 23a; 122a, 123a; 222a, 223a) in the superimposed rings (22, 23; 122, 123; 222, 223) are of triangular shape.

7. Gas turbine engine in accordance with any of the Claims 1 to 6 characterized in that the support is constituted by a radial wall extending from the inner circumferential root (17) of the blades (4) of the diffuser and by an inner radial flange (19) fixed to the inner roots (12) of the said blades (4) in such way that the air drawn from the surround (16) of the combustion chamber (10) after passing through the openings (22a, 23a) in the superimposed rings (22, 23) fitted into annular recesses (20, 21) in the said support (19, 17) is then directed to a rotor stage (26, 27) of the turbine in order to cool it.

8. Gas turbine engine in accordance with any of the Claims 1 to 6 characterized in that the two superimposed rings (122, 123) are placed within an annular enclosure (142) formed in the U-shaped annular support (130, 140) of a sealing ring (128) of the turbine stator which also constitutes the support for the said rings (122, 123) in such a way that the adjustment of the running clearance between the rotor and the stator is obtained by controlling the radial displacements of the sealing ring (128) in accordance with the thermal expansion of the support (130, 140) caused by the impact of jets of air whose flow is regulated cancelled or activated by the airways through the openings (122a, 123a) in the said superimposed rings (122, 123), the said annular enclosure (142) being connected to an air take-off from the compressor stages of the engine.

9. Gas turbine engine in accordance with any one of the Claims 1 to 6 characterized in that the two superimposed rings (222, 223) are mounted in two annular throats (220, 221) formed within two inner radial flanges (251, 252) of a compressor housing (203) and in that an additional metal ring (256) is arranged above the radially innermost side comprising openings (256a) for the passage of air, the air bled-off being conveyed by the ventilation and cooling system of the gas turbine through the intermediary of the passages (203b) in the housing (203) which emerge into a manifold (257) and each ceramic ring (222, 223) being linked to the said metallic ring (256) at a single point, respectively at each end of the said ring (256).

10. Gas turbine engine in accordance with Claim 9 characterized in that the two superimposed rings (222, 223) and the metallic support (256) comprise respectively two quadrants, the fixing points being located respectively at opposite ends of the quadrants.

**Patentansprüche**

1. Turbomaschine mit einem Kreis für die Zuführung von Ventilationsluft und einer Vorrichtung zur automatischen Steuerung des Ventilationsluft-Durchsatzes durch die Turbine, dadurch gekennzeichnet, daß sich in dem Luftkreis zwei radial übereinander liegende und konzentrisch in einem Träger (17, 19; 130, 140; 251, 252, 256) angeordnete Ringe (22, 23; 122, 123, 222, 223) befinden, wobei jeder dieser Ringe (22, 23; 122, 123; 222, 223) offen ist und einen transversalen Schlitz (22b, 23b) aufweist und nur in einem, dem jeweiligen Schlitz (22b, 23b) diametral gegenüberliegenden Punkt (22c, 23c) an dem Träger (17, 19; 140) befestigt ist, wobei die beiden Befestigungspunkte einander diametral entgegengesetzt sind und jeder Ring (22, 23; 122, 123; 222, 223) Öffnungen (22a, 23a; 122a, 123a; 222a, 223a) besitzt, die regelmäßig über seinen Umfang verteilt sind, und daß das Material, aus dem die übereinanderliegenden Ringe (22, 23; 122, 123; 222, 223) bestehen, einen Wärmeausdehnungskoeffizient hat, der deutlich kleiner ist als der Wärmeausdehnungskoeffizient des Materials, aus dem der Träger (17, 19; 130, 140; 256) besteht, so daß in Abhängigkeit von den Wärmeausdehnungen des Trägers (17, 19; 130, 140; 256) nach Maßgabe der Betriebsbedingungen der Turbomaschine die Öffnungen (22a, 23a; 122a, 123a; 222a, 223a) der Ringe (22, 23; 122, 123; 222, 223) entweder in ihrer Position übereinstimmen und Ventilationsluft durchstömen lassen, oder vollständig gegeneinander versetzt sind und jeden Durchtritt von Ventilationsluft verhindern, oder eine Zwischenposition einnehmen, so daß sich ein modulierter Durchsatz an Ventilationsluft ergibt.

2. Turbomaschine nach Anspruch 1, dadurch gekennzeichnet, daß der Träger (17, 19; 130, 140; 256) aus einem metallischen Werkstoff besteht und daß die übereinanderliegenden Ringe (22, 23; 122, 123; 222, 223) aus einem Werkstoff bestehen, dessen Wärmeausdehnungskoeffizient deutlich kleiner ist als derjenige des Werkstoffs des Trägers, wobei der Werkstoff der Ringe ein Keramikwerkstoff ist.

3. Turbomaschine nach einem der Ansprüche 1 oder 2, dadurch gekennzeichnet, daß die Öffnungen (22a, 23a; 122a, 123a; 222a, 223a) der übereinanderliegenden Ringe Rechteckform haben, so daß der Durchgangsquerschnitt sich in Abhängigkeit von der Temperatur linear ändert.

4. Turbomaschine nach einem der Ansprüche 1 oder 2, dadurch gekennzeichnet, daß die Öffnungen (22a, 23a; 122a, 123a; 222a, 223a) der übereinanderliegenden Ringe (22, 23; 122, 123; 222, 223) eine solche Form haben, daß die Querschnittsänderung des Durchgangs eine nichtlineare Funktion der Temperatur ist.

5. Turbomaschine nach Anspruch 4, dadurch gekennzeichnet, daß die Öffnungen (22a, 23a; 122a, 123a; 222a, 223a) der übereinanderliegenden Ringe (22, 23; 122, 123; 222, 223) Trapezform haben.

6. Turbomaschine nach Anspruch 4, dadurch gekennzeichnet, daß die Öffnungen (22a, 23a; 122a, 123a; 222a, 223a) der übereinanderliegenden Ringe (22, 23; 122, 123; 222, 223) Dreieckform haben.

7. Turbomaschine nach einem der Ansprüche 1 bis 6, dadurch gekennzeichnet, daß der Träger aus einer radialen Wandung des umlaufenden inneren Absatzes (17) der Verteilerschaufeln (4) und einem inneren radialen Flansch (19) gebildet ist, der an den inneren Absätzen (12) dieser Schaufeln (4) so befestigt ist, daß die in dem Behälter (16) der Brennkammer (10) entnommene Luft nach dem Durchgang durch die Öffnungen (22a, 23a) der in ringförmigen Kehlen (20, 21) des Trägers (19, 17) montierten übereinanderliegenden Ringe (22, 23) anschließend zu einer Turbinenrotorstufe (26, 27) geleitet wird, um diese zu kühlen.

8. Turbomaschine nach einem der Ansprüche 1 bis 6, dadurch gekennzeichnet, daß die beiden übereinanderliegenden Ringe (122, 123) im Innern einer ringförmigen Einfassung (142) angeordnet sind, die im Innern des U-förmigen Querschnitt aufweisenden ringförmigen Trägers (130, 140) eines Dichtungsringes (128) des Turbinenstators angebracht ist, der gleichfalls den Träger der genannten Ringe (122, 123) bildet, derart daß die Einstellung des beim Betrieb auftretenden Spiels zwischen Rotor und Stator durch die Steuerung der radialen Verschiebungen des Dichtungsrings (128) entsprechend Wärmeausdehnungen des Trägers (130, 140) gewonnen wird, die durch das Aufprallen von Luftströmungen hervorgerufen wird, deren Durchsatz durch den Durchtritt durch die Öffnungen (122a, 123a) der übereinanderliegenden Ringe (122, 123) entweder geregelt oder verhindert oder ermöglicht wird, wobei die genannte ringförmige Einfassung (142) mit einer Luftentnahmestelle im Verdichter der Turbomaschine verbunden ist.

9. Turbomaschine nach einem der Ansprüche 1 bis 6, dadurch gekennzeichnet, daß die beiden übereinanderliegenden Ringe (222, 223) in zwei ringförmigen Kehlen (220, 221) gegenüber zwei inneren radialen Flanschen (251, 252) eines Verdichtergehäuses (203) montiert sind, und daß ein zusätzlicher Metallring (256), der Luftdurchtrittsöffnungen (256a) aufweist, überlagernd auf der radial inneren Seite angeordnet ist, wobei die Luftentnahme durch die Ventilation und die Kühlung der Turbine geleitet wird und durch Durchgänge (203b) des Gehäuses (203) erfolgt, die in einem Sammler (257) münden und wobei jeder keramische Ring (222, 223) mit dem genannten Metallring (256) in einem einzigen Punkt verbunden ist, der jeweils in einem Endbereich des Metallrings (256) liegt.

10. Turbomaschine nach Anspruch 9, dadurch gekennzeichnet, daß die beiden übereinanderliegenden Ringe (222, 223) und der Metallring (256) jeweils zwei Sektoren haben und daß die Befestigungspunkte jeweils auf den entgegengesetzten Endbereichen der Sektoren verteilt sind.

FIG:1

FIG:2

FIG:3

FIG:4a

FIG:4b

FIG: 5a

FIG: 5b

FIG: 6c

FIG: 6b

FIG: 6a

FIG: 7

FIG:8

FIG:9

FIG:10